# EUROPEAN PATENT APPLICATION

(11) **EP 4 491 999 A1**
(43) Date of publication of application: **15.01.2025**
(21) Application number: 23766574.0
(22) Date of filing: 22.02.2023
(51) Int. Cl.: G01B 11/25

(54) **SURFACE SHAPE MEASUREMENT DEVICE**

(30) Priority: 08.03.2022 JP 2022035741
(71) Applicant: Mitutoyo Corporation, Kawasaki-shi, Kanagawa 213-8533 (JP)
(72) Inventor: TANABE, Tetsuro, Chikushino-shi, Fukuoka 818-0013 (JP); NISHIO, Akira, Chikushino-shi, Fukuoka 818-0013 (JP); MAWATARI, Toshiyuki, Kawasaki-shi, Kanagawa 213-8533 (JP)
(74) Representative: MERH-IP Matias Erny Reichl Hoffmann Patentanwälte PartG mbB
(86) International application number: PCT/JP2023/006557
(87) International publication number: WO 2023/171396

(57) **Abstract**

To enable quick and accurate measurement of the surface shape of an object to be measured of a so-called rotating body or an approximate rotating body. A surface shape measuring device according to the present invention measures the three-dimensional shape of a measurement surface in an object to be measured in the shape of a rotating body or an approximate rotating body by optical sectioning method. The surface shape measuring device comprises: a rotary table that rotates the placed object to be measured in a circumferential direction; an encoder that sequentially outputs signals according to the rotation angle of the rotary table; an optical sectioning sensor that irradiates a band of light or a line of light onto the measurement surface and acquires a plurality of optical section line image data by sequentially capturing optical section lines generated by the band of light or the line of light, which move across the measurement surface as the rotary table rotates, triggered by a signal output from the encoder; and an image processing unit that generates an image showing the surface shape of the measurement surface by sequentially arranging the respective optical section line image data according to the corresponding rotation angle.

## Description

### TECHNICAL FIELD

The present invention relates to a surface shape measurement device for measuring the surface shape of an object to be measured in the shape of a so-called rotating body or an approximate rotating body, which is a three-dimensional shape formed by rotating a plane figure around a rotation axis, such as a cylinder, a doughnut shape, etc.

### BACKGROUND ART

Conventionally, various devices have been proposed for measuring the surface shape of tires and other objects (see, for example, Patent Document 1)

### PRIOR ART DOCUMENTS

### PATENT DOCUMENT

[Patent Document 1] Patent Publication No. JP2014-104913

### SUMMARY OF THE INVENTION

### PROBLEM TO BE SOLVED BY THE INVENTION

A measuring device in Patent Document 1 uses a point laser, which requires repeated main-scanning and sub-scanning, and therefore measurement is time-consuming.

An object of the present invention is to provide a surface shape measuring device capable of quickly and accurately measuring the surface shape of an object to be measured of a so-called rotating body or an approximate rotating body, which is a three-dimensional shape formed by rotating a plane figure around a rotation axis, such as a cylinder, a doughnut shape, etc.

### MEANS FOR SOLVING THE PROBLEM

A surface shape measuring device according to at least some embodiments of the invention measures a three-dimensional shape of a measurement surface in an object to be measured in the shape of a rotating body or an approximate rotating body by an optical sectioning method. The surface shape measurement device comprises a rotary table that rotates the placed object to be measured in a circumferential direction; an encoder that sequentially outputs signals according to the rotation angle of the rotary table, an optical sectioning sensor that irradiates a band-shaped light or a line-shaped light onto the measurement surface and acquires optical section line image data for each rotation angle by sequentially capturing optical section lines generated by the band-shaped light or the line-shaped light, which move across the measurement surface as the rotary table rotates, triggered by a signal output from the encoder; and an image processing unit that generates an image showing the surface shape of the measurement surface by sequentially arranging the respective optical section line image data according to the corresponding rotation angle. In this application, a rotating body means a three-dimensional shape formed by rotating a plane figure around an axis of rotation. In addition, an approximate rotating body means a three-dimensional shape that approximates the rotating body to the extent that it can generally be regarded as a rotating body.

According to the surface shape measurement device configured in this way, the surface shape can be measured quickly and accurately, as the measurement is carried out by the optical sectioning method while scanning the measurement surface with the band-shaped light or the line-shaped light.

### BRIEF DESCRIPTION OF THE DRAWINGS

Fig. 1 shows the configuration of a surface shape measurement device 100 according to the present invention.
Fig. 2 shows the functional block diagram of the surface shape measurement device 100 according to the present invention.
Fig. 3 illustrates how the center of the rotary table 110 is recognized by the control unit 160.
Fig. 4 illustrates an example of the arrangement of the optical sectioning sensor 130 with respect to the object to be measured W when the bottom surface Wb is the measurement surface.
Fig. 5 illustrates an example of the arrangement of the optical sectioning sensor 130 with respect to the object to be measured W when the side surface Ws is the measurement surface.
Fig. 6 illustrates an example of a plurality of optical section line images B and an image showing the surface shape of the measurement surface generated on the basis of these optical section line images.
Fig. 7 illustrates an example of a three-dimensional image generated based on the optical section line image data of the bottom surface and the side surface.
Fig. 8 schematically illustrates the method for extracting data of the convex-concavity of the surface of the object to be measured W from the three-dimensional shape of the object to be measured W.
Fig. 9 is a flowchart showing an example of the procedure for recognizing characters or figures from the convex-concavity data.
Fig. 10 is a schematic diagram showing an example of the object W to be measured on the rotary table 110.
Fig. 11 shows an example of a planar image IMG generated by the image processing unit 140.
Fig. 12 shows an example of the object to be measured W whose inner and outer diameters vary with height. Fig. 12(a) is a perspective view, and Fig. 12(b) is a cross-sectional view in a section through the center of the object to be measured W.
Fig. 13 is a flowchart showing an example of the procedure for measuring the maximum and/or minimum values of the inner and/or outer diameter.

### EMBODIMENTS OF THE INVENTION

Hereinafter, embodiments of the present invention will be described with reference to the drawings. In the following description and drawings, the same reference numeral is attached to the same functional parts, and the functional parts once explained are either omitted or explained to the extent necessary.

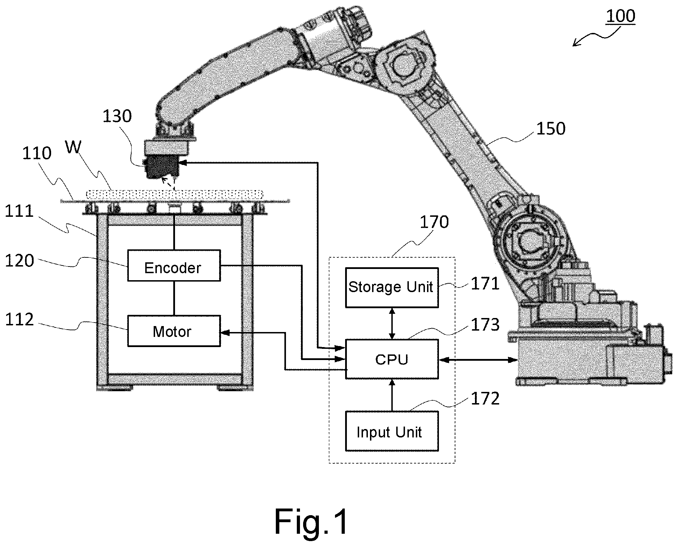

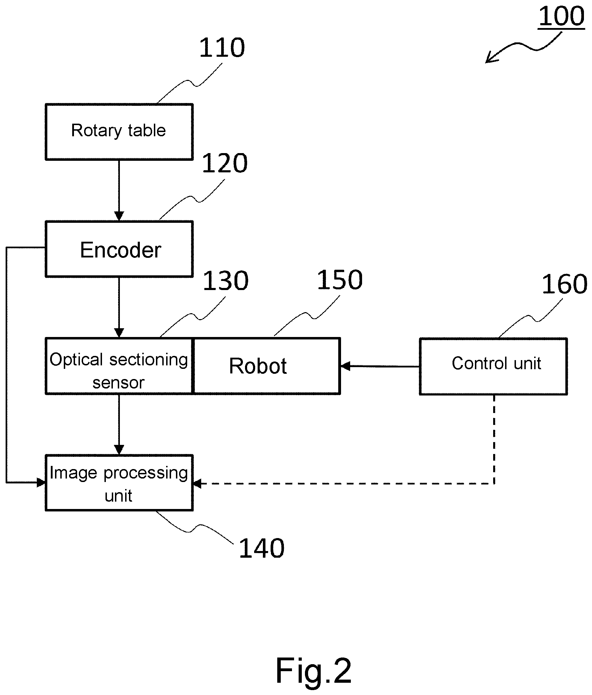

The configuration and functional block diagram of the surface shape measurement device 100 are shown in Fig. 1 and Fig. 2, respectively.

The surface shape measurement device 100 includes a rotary table 110, an encoder 120, an optical sectioning sensor 130, and an image processing unit 140.

The rotary table 110 is a table that rotates the placed object to be measured W, in a circumferential direction. The object to be measured W, is a so-called rotating body or an approximate rotating body, which is a three-dimensional shape formed by rotating a plane figure around a rotation axis, such as a cylinder, doughnut, or the like. The object to be measured W is placed on the rotary table 110 with one of the two bottom surfaces in contact with the rotary table. Specifically, when the measuring surface is one of the bottom surfaces, the object to be measured is placed so that the other bottom surface contacts the rotary table, and when the measuring surface is a side surface, the object is placed so that any bottom surface contacts the rotary table.

The configuration to make the rotary table 110 rotatable is arbitrary as long as the placed object to be measured W can be rotated in the circumferential direction. For example, as shown in Fig. 1, the rotary table 110 with casters at the bottom may be placed on a platform 111 and configured to rotate on the platform 111. The driving force for the rotation may be provided by the motor 112 or by human power. When employing the motor 112, a servo motor may be used, for example, in terms of accurate positioning.

The encoder 120 is a rotary encoder, for example, and may be configured to generate 3600 pulses per rotation, for example, one pulse per 0.1 degree rotation, depending on the rotation angle of rotary table 110.

The optical sectioning sensor 130 irradiates a band-shaped light or a line-shaped light in the radial direction of the measured object W to the bottom surface when the measuring surface is the bottom surface, and irradiates the band-shaped light or the line-shaped light in the height direction of the measured object to the side surface when the measuring surface is the side surface. By irradiating the band-shaped light or line light, an optical section line is generated on the measurement surface in the band direction, and the optical section line moves relative to the measurement surface as the rotary table 110 rotates. The optical sectioning sensor 130 sequentially captures the optical section lines triggered by the signal output from the encoder 120, and acquires optical section line image data for each rotation angle. The optical section line image data consists of a plurality of point data indicating the cross-sectional shape of the object to be measured W in the range of the optical section line, and each point data has information on the height of the cross-section at the point position in the direction of the optical section line. In other words, the optical section line image data is two-dimensional point cloud data.

The optical sectioning sensor 130 is equipped with a light source that emits a band of laser light and a light receiving device that captures the optical section lines generated on the measurement surface by the band-shaped light or the line-shaped light, and acquires the shape shape of the measurement surface generated by the triangulation principle as the optical section line image data. By employing the measurement method using the optical sectioning method, it is possible to distinguish between convex-concavity indicating defects and intentionally formed convexity such as characters or patterns, which are difficult to distinguish with a two-dimensional camera because they are monochromatic, as in the case of tires, for example.

In order to position the optical sectioning sensor 130 at the acquisition position of the optical section line image of any measurement surface in the object to be measured W of any size, the optical sectioning sensor 130 may be attached to the distal end of an articulated arm of a robot 150 having the articulated arm, for example. As for the robot 150, an industrial robot may be employed, for example, in terms of accurate position control.

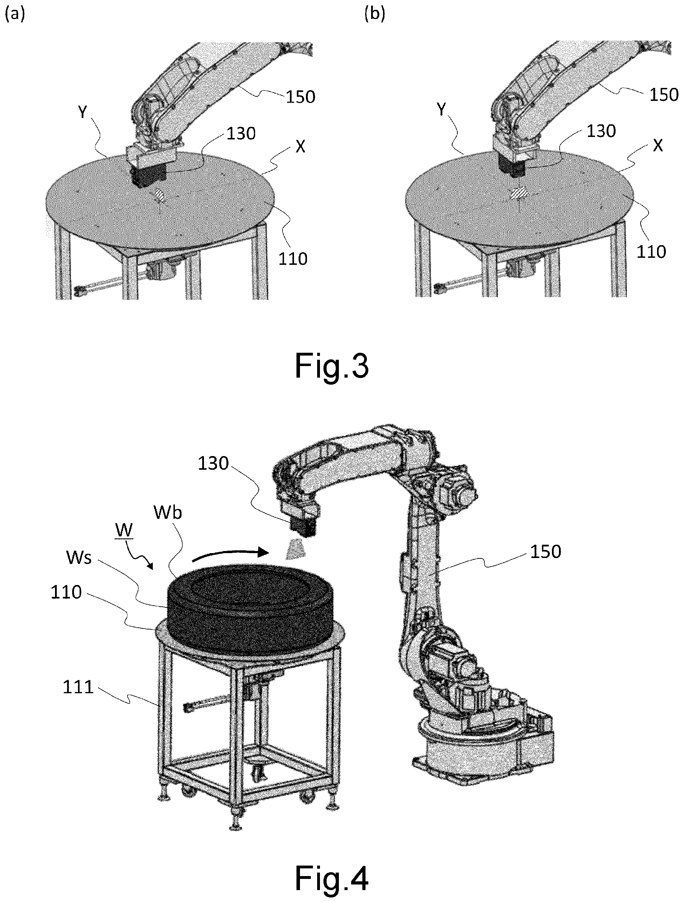

When using the optical sectioning sensor 130 attached to the robot 150, the position of the rotary table 110 is recognized in advance by the control unit 160 that controls the robot 150. For example, when the X and Y axes, which intersect and are orthogonal at the center of the rotary table 110, have been identified in advance, first, as shown in Fig. 3(a), the position of X=0 is recognized by the control unit 160 by moving the optical sectioning sensor 130 to the position where the band-shaped light or the line-shaped light emitted from the light source is irradiated on the Y axis. Then, as shown in Fig. 3(b), the position of Y=0 is recognized by the control unit 160 by moving the optical sectioning sensor 130 to the position where the band-shaped light or the line-shaped light emitted from the light source is irradiated on the X axis. In this way, the optical sectioning sensor 130 can be easily and accurately moved to the specified position with respect to the center of the rotary table 110. Therefore, the optical sectioning sensor 130 can be easily and accurately moved and positioned to the position where the optical section line image data is to be acquired by inputting instructions indicating the position where the optical section line image data of any measurement surface of the object to be measured W is to be acquired to the control unit 160 as the moving destination. The robot 150 may be manually operated to move the optical sectioning sensor 130 to any position without inputting instructions indicating a specific position to the control unit 160. In this case, the position after the movement can be recognized by the control unit 160 with respect to the center of the rotary table 110, and can be obtained and used by the image processing unit 140 or other units as necessary.

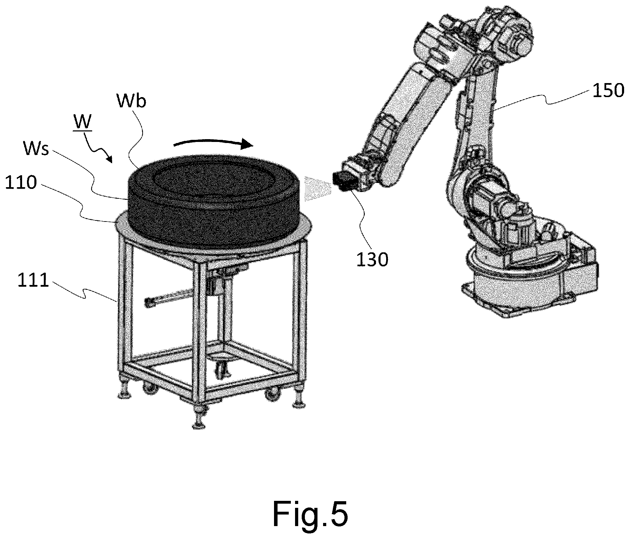

Fig. 4 illustrates an example of the arrangement of the optical sectioning sensor 130 with respect to the object to be measured W when the bottom surface Wb of the object to be measured W is the measurement surface. If the object W to be measured is a tire, the bottom surface Wb corresponds to the sidewall surface. Fig. 5 illustrates an example of the arrangement of the optical sectioning sensor 130 with respect to the object to be measured W when the side surface Ws of the object to be measured W is the measurement surface. If the object to be measured W is a tire, the side surface Ws corresponds to the tread surface. By attaching the optical sectioning sensor 130 to the robot 150, such an arbitrary arrangement can be easily and accurately implemented. With the optical sectioning sensor 130 arranged in this manner, the optical sectioning sensor 130 can be activated and the rotary table 110 rotated to sequentially acquire optical section line image data of the measurement surface each time the signal is input from the encoder 120. Each optical section line image data acquired contains information on the convex-concavity in the band-shaped area.

The image processing unit 140 collects the respective optical section line image data acquired by the optical sectioning sensor 130 and sequentially arranges them according to the corresponding rotation angle to generate an image showing the surface shape of the measurement surface. Based on the generated image, the image processing unit 140 may also perform processes such as calculating the dimensions of each part of the object to be measured W that appears in the image.

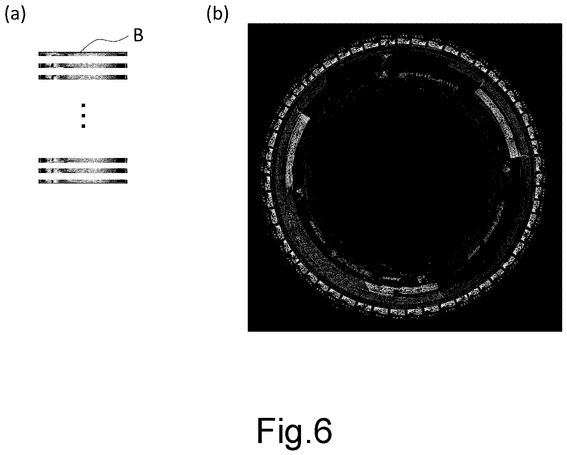

When the optical section line image data acquired sequentially for each rotation angle at the optical sectioning sensor 130 are imaged, a plurality of optical section line images B for each rotation angle are obtained, as shown in Fig. 6(a). When the measurement surface is the bottom surface, a three-dimensional image showing the surface shape of the bottom surface can be generated by arranging such optical section line images B for each rotation angle for one rotation at the same radial position. When the measurement surface is the side surface, a three-dimensional image showing the surface shape of the side surface can be generated by arranging the optical section line images B, which are banded in the height direction, along the circumference of a circle whose radius is the radius of the object W to be measured, for one rotation.

The three-dimensional image showing the surface shape of the measurement surface is actually generated as follows Each optical section line image data acquired by the optical sectioning sensor 130 is two-dimensional point cloud data showing the cross-sectional shape of the object to be measured **W.** However, in the image processing unit 140, information on the rotation angle corresponding to the triggered signal can be added to the optical section line image data acquired triggered by the signal output from the encoder 120 corresponding to the rotation angle as information on the third dimension to convert the optical section line image data into a three-dimensional point cloud data. By three dimensionally arranging the respective optical section line image data converted into three-dimensional point group data in this way, a three-dimensional image showing the surface shape of the measurement surface of the object to be measured W, can be generated.

When the measurement surface is the bottom surface, the point cloud data, which is the respective optical section line image data acquired by the optical sectioning sensor 130, is two-dimensional point cloud data whose elements are the coordinates r of the point position in the radial direction, which is the optical section line direction, of the object to be measured W, and the coordinates z in the height direction of the object to be measured W, which indicates the height of the section at the coordinate r. By adding the rotation angle θ corresponding to the respective optical section line image data to the two-dimensional point cloud data as the rotation angle of the coordinate r, the data can be converted into three-dimensional point cloud data. When the measurement surface is a side surface, the point cloud data, which is the respective optical section line image data acquired by the optical sectioning sensor 130, is two-dimensional point cloud data consisting of the coordinate z of a point position in the height direction of the object to be measured W, which is the optical section line direction, and the coordinate r in the radial direction of the object to be measured W, which indicates the height of the section at the coordinate z. By adding the rotation angle θ corresponding to each optical section line image data as the rotation angle of coordinate r to the two-dimensional point cloud data, the data can be converted into three-dimensional point cloud data.

In a three-dimensional image showing the surface shape of the measurement surface, the method of expressing the convex-concavity of the measurement surface is arbitrary; for example, it may be expressed three-dimensionally, or it may be expressed by color differences or shading. Fig. 6(b) is an example of a three-dimensional image showing the surface shape of the side surface of a tire.

When both the optical section line image data for each rotation angle of the bottom surface and the optical section line image data for each rotation angle of the side surface have been acquired, the image processing unit 140 may generate a three-dimensional image of the object to be measured W from both data, in which the surface shape of the bottom surface and that of the side surface are continuously expressed.

The three-dimensional point cloud data of the bottom surface based on the optical section line image data for each rotation angle of the bottom surface and the three-dimensional point cloud data of the side surface based on the optical section line image data for each rotation angle of the side surface are each constituted by the coordinate r in the radial direction of the object to be measured W, the rotation angle θ of the coordinate r, and the coordinate z in the height direction of the object to be measured W. Therefore, by aligning the coordinate system of the three-dimensional point cloud data of the bottom surface with that of the three-dimensional point cloud data of the side surface, a three-dimensional image of the measured object W can be generated in which the surface shape of the bottom surface and that of the side surface are continuously expressed. Although it is possible to acquire the data of the bottom surface and the side surface in different coordinate systems and then adjust the coordinate systems by conversion, etc., it is quicker and more accurate to generate a three-dimensional image by acquiring the data in the same coordinate system. For example, by using the robot 150 with the optical sectioning sensor 130 attached to the distal end of its arm and acquiring optical section line image data for each rotation angle of the bottom surface and optical section line image data for each rotation angle of the side surface under the coordinate system set with reference to the center of the rotary table 110 as previously described, the data with the same coordinate system can be easily acquired.

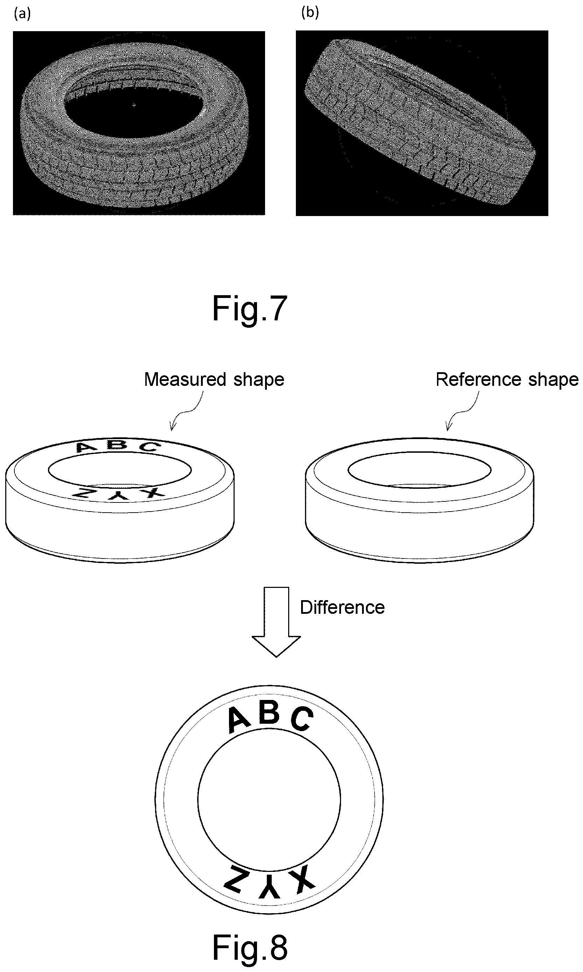

An example of a generated three-dimensional image is shown in Fig. 7(a). As shown in Fig. 7(b), it is also possible to rotate the image for observation. By generating the three-dimensional image in this way, the surface shape of the object to be measured W can be quickly collated with the surface shape in the CAD drawings at the time of design.

Besides generating three-dimensional images, when the radius of the bottom of the object to be measured W or the height of the object to be measured W is wider than the width of the optical section line, the image processing unit 140 may also acquire three-dimensional point cloud data based on the optical section line image data for each rotation angle by moving the position of the optical sectioning sensor 130 to two or more positions and keeping the optical sectioning sensor 130 stationary at each position. By aligning the coordinate system of the three-dimensional point cloud data acquired at each of two or more stationary positions of the optical sectioning sensor 130, it is possible, for example, to continuously express the surface shape of the measurement surface of the object to be measured W of large size. Although it is possible to acquire data in different coordinate systems at each location and then match the coordinate systems by conversion or other means, by acquiring data in the same coordinate system, a three-dimensional image can be generated more quickly and accurately. For example, by using the robot 150 with the optical sectioning sensor 130 attached to the distal end of its arm and acquiring optical section line image data for each rotation angle at two or more stationary positions of the optical sectioning sensor 130 under the coordinate system set with reference to the center of the rotary table 110 as previously described, the data with the same coordinate system can be easily acquired.
when acquiring the optical section line image data with the optical sectioning sensor 130, if the center of rotation of the rotary table 110 and the center axis of the placed object to be measured W are misaligned even slightly, when the measurement surface is the bottom surface, the trajectory of the optical sectioning sensor 130 moving relatively on the measurement surface during one rotation of the rotary table 110 will be shifted sinusoidally in the radial direction. However, even for misaligned trajectories, optical section line image data at each rotation angle can be acquired as long as the trajectory is within the detection range of the optical sectioning sensor 130. It should be noted, however, that a lens is used in the light-receiving part of the optical sectioning sensor 130, which is a noncontact sensor, and the lens has the least distortion in the central part and more distortion toward the periphery. Therefore, by adjusting the position of the optical sectioning sensor 130 so that the image of the two-dimensional profile comes to the center of the detection range by the sensor as close as possible, and by adjusting the position where the object to be measured W is placed so that the center axis of the object to be measured W coincides with the center of rotation of the rotary table 110 as close as possible, the most accurate image can be obtained.

The trajectory deviation due to the misalignment between the center of rotation of the rotary table 110 and the central axis of the placed object to be measured W varies regularly (sinusoidally) according to the rotation angle. Therefore, when sequentially arranging the respective optical section line image data in the image processing unit 140 according to the corresponding rotation angle, the respective optical section line image data may be corrected and arranged based on the regularity of such variation according to the rotation angle. Thereby, the center axis in the measured surface shape can be matched with the center axis of the 3D design data of the object to be measured W, and can be collated with the design values, allowing for easy shape evaluation.

Note that the occurrence of a misalignment between the center of rotation of the rotary table 110 and the center axis of the placed object to be measured W, which is the trigger for correction, may be recognized by an operator checking the image generated by the image processing unit 140, or it may be recognized automatically based on the optical section line image data for each rotation angle obtained by the image processing unit 140. If the occurrence of misalignment is recognized, correction may be performed by the operator inputting instructions, or it may be performed automatically by the image processing section 140, which calculates the amount of misalignment using the least-squares method or other methods.

The image processing unit 140 and control unit 160 may each have dedicated functional components, or they may be realized by a computer 170. The computer 170 is at least equipped with a storage unit 171, an input unit 172, a CPU 173, a display unit not shown, and an external interface not shown. The computer 170 may be a personal computer, for example.

The computer 170 is communicatively connected to the motor 112, the encoder 120, the optical sectioning sensor 130, and the robot 150 via an arbitrary external interface.

The storage unit 171 is an arbitrary storage medium in which a program describing the functions of the image processing unit 140 and a program describing the functions of the control unit 160 are stored in advance, as well as the optical section line image data acquired by the optical sectioning sensor 130 and the processing results by the image processing unit 140. The storage unit 171 may be provided outside of the computer 170 and communicatively connected via an external interface.

The input unit 172 is an input interface, such as a mouse or keyboard, that accepts instructions and other inputs of the operator. When an operator inputs an instruction to execute the program from input unit 172, the program is loaded from the storage unit 171 into the CPU 173, which is an arithmetic processing unit, and the program is executed. The operator inputs instructions and other information via a screen interface displayed by executing the program, and the program content according to the input is executed by the CPU 173 to realize the functions of the image processing unit 140 and the control unit 160.

In addition, the computer 170 may further be configured to control the motor 112 and the encoder 120.

According to the surface shape measurement device 100 explained above, the surface shape can be measured quickly and accurately, as the measurement is carried out by the optical sectioning method while scanning the measurement surface with the band-shaped light or the line-shaped light. In addition, by building a three-dimensional model of the object to be measured W inside the computer from the three-dimensional measurement data and displaying the object to be measured on the screen based on this three-dimensional model using 3D computer graphics, it is possible to quickly change the viewing direction on the screen, enlarge the image, or specify a specific position to display and confirm the dimensions. Consequently, the efficiency of dimensional confirmation and inspection of surface shape and surface properties, which were previously performed by visual inspection, can be improved.

The processing of the surface shape data and three-dimensional image of the object to be measured W obtained as described above is described below. The process described below may be performed, for example, by computer 170 (more specifically, by image processing unit 140).

### (Recognition and collation of characters and figures)

Characters or figures may be drawn as convexities (embossed or concave) or concavities (debossed or engraved) on the surface of the object to be measured W. These characters or figures are provided as decorations on the object to be measured W, and may also be provided as indications of manufacturing information such as product numbers, serial numbers, etc. In the object to be measured W, it is sometimes required to extract and recognize characters and figures drawn as concavities and/or convexities (hereinafter simply referred to as convex-concavity) for the purpose of identifying the object to be measured W, judging whether it is good or bad, and so on.

As schematically shown in Fig. 8, the convex-concavity of the surface of the object to be measured W can be extracted as the difference between the measured three-dimensional shape and the shape when the object to be measured W is not provided with the convex-concavity (hereinafter referred to as a reference shape). The process of recognizing characters and images is carried out on the image generated by extracting the convex-concavity in this way.

For example, assume a situation where the object to be measured W is a tire, and a character or figure drawn as convexities on the sidewall of the tire (i.e., the bottom surface of the cylindrical object to be measured W) is to be recognized. In this case, the shape of the tire without convexities in the sidewalls (smooth surface) is the reference shape. The coordinate data of the reference shape (hereinafter referred to as "reference shape data") to be subtracted from the three-dimensional shape of the object to be measured W may be generated by processing the three-dimensional shape data of the object to be measured W with a filter, point cloud optimization, curvature transformation, etc. to remove convex-concavity. Alternatively, reference shape data may be prepared in advance based on the design data of the object to be measured W, etc. The reference shape data may be expressed in a cylindrical coordinate system (r, θ, z), in the same way as the three-dimensional point cloud data obtained by the measurement.

After aligning the three-dimensional shape of the object to be measured W obtained by measurement with the reference shape data, the difference between the coordinates z obtained by measurement of the object to be measured W at each coordinate position in the r-θ plane (plane parallel to the mounting surface of the rotary table) and the coordinates z of the reference shape data is calculated thereby the convexity on the bottom surface of the object to be measured W can be extracted. Hereafter, the data extracted in this way will be referred to as convex-concavity data. Needless to say, if the characters or figures are formed as concavities, the concavities can be extracted by the same method.

If the convex-concavity in the object to be measured W is formed on a different surface than the surface parallel to the mounting surface of the rotary table, the convex-concavity can be extracted by finding the difference in the direction in which the convex-concavity protrudes or dips. For example, if the object to be measured is formed on the side surface of a cylindrical shape in the object to be measured W, the convex-concavity can be extracted by obtaining the difference in coordinates r (i.e., coordinates in the radial direction of the surface of the object to be measured W).

The object to be measured W when a 3D image is acquired may be deformed compared to the shape assumed at the time of design. For example, if the object to be measured W is a tire, the three-dimensional shape of the tire assumed at the time of design is that of a tire mounted on a wheel with a specified internal pressure applied. In contrast, when a tire is not mounted on a wheel and no internal pressure is applied, the bead (the part of the tire in contact with the wheel rim) and the tire wall may be deformed by its own weight or other factors when the tire is measured. When the reference shape data used to extract the convex-concavity of the object to be measured W is prepared in advance based on design data, etc., it is preferable to take into account the deformation of the object to be measured W at the time of measurement and use the data of a similarly deformed shape as the reference shape data.

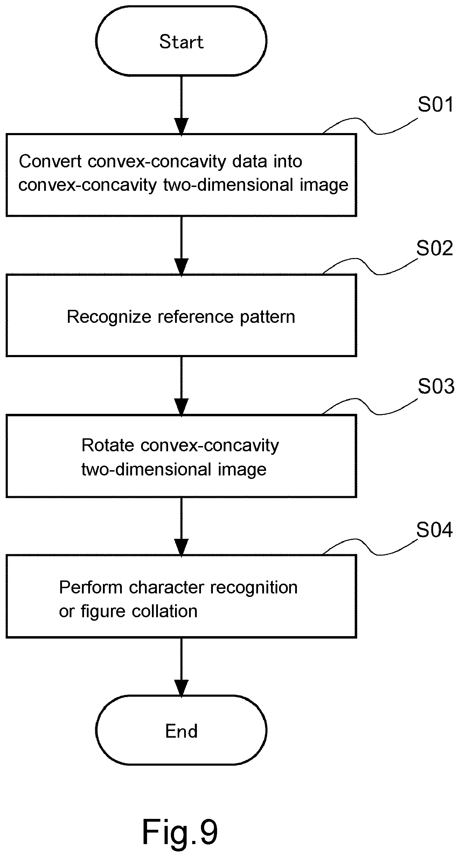

The method of recognizing characters and figures from the convex-concavity data is arbitrary. An example of this method is described below, referring to the flowchart shown in Fig. 9.

First, the convex-concavity data, which indicates the amount of convex-concavity with respect to the surface of the reference shape, is converted into a convex-concavity two-dimensional image with pixel values corresponding to the amount of convex-concavity (S01). This convex-concavity two-dimensional image includes characters and figures drawn as convex-concavities on the object to be measured W. The angle at which they appear in the image depends on the angle at which the object to be measured W is placed on the rotary table 110 at the time of measurement and is not at a fixed angle. Thus, a predetermined reference pattern is recognized from the object to be measured W in the convex-concavity two-dimensional image (S02). Then, the convex-concavity two-dimensional image is rotated so that the reference pattern is positioned in a predetermined position in the object to be measured W in the convex-concavity two-dimensional image (S03). By rotating the convex-concavity two-dimensional image in this way, the orientation (angle) of the object to be measured W in the convex-concavity two-dimensional image can be aligned with the reference orientation (angle). Then, character recognition or figure collation is performed using an arbitrary method on the convex-concavity two-dimensional image rotated to a reference angle (S04).

For example, character recognition can be performed by OCR (Optical Character Recognition). In order to increase the efficiency of processing by OCR, it is desirable to specify in advance the region where OCR is to be performed, the angle at which the characters are to appear in that region, the size of the characters, etc., in the convex-concavity two-dimensional image that has been rotated to become the reference angle. The recognized character string can be used in later processing, for example, by comparing and collating it with a predetermined character string, or by associating it with the measurement data of the object to be measured W stored in the storage unit 171.

Alternatively, it is possible to determine whether the desired characters or figures are drawn by collating the image with a reference image corresponding to the design data or block copy data of the object to be measured **W.** The reference image is preferably deformed to correspond to the deformation of the object to be measured W at the time of measurement, in the same manner as the reference shape data described above. By collation using figures, it is possible to determine whether the object W to be measured is good or bad, to check whether the object to be measured W was manufactured using the proper mold, and so on.

### (Measurement of inner or outer circumference length)

There are cases in which the length of the outer or inner circumference is required to be measured for an object to be measured W, which has an approximate circular outer or inner circumference. If the object to be measured W is easily deformable (e.g., circular rubber packing), even if the inner and outer circumference lengths are calculated by approximating the outer and inner circumference of the three-dimensional shape of the object to be measured W as circles, high accuracy cannot be expected due to deformation.

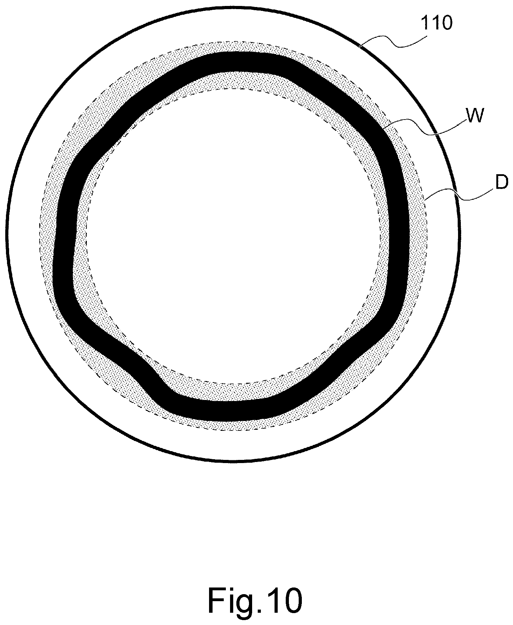

In the surface shape measurement device 100 in the present embodiment, the object to be measured W is placed on the rotary table 110 to perform surface shape measurement. At this time, the object to be measured W need only be placed on the rotary table 110 so that the inner and/or outer circumference of interest falls within the detection range D of the optical sectioning sensor 130 when the rotary table 110 is rotated, as shown in Fig. 10, and there is no need to strictly suppress the deformation of the object to be measured W to make it an ideal circular shape (circular ring shape).

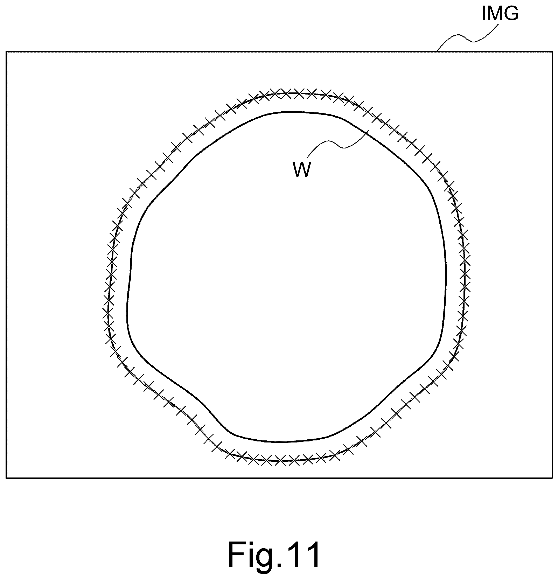

Then, from the data obtained by the measurement (i.e., optical section line image data at all rotation angles), the image processing unit 140 generates a planar image IMG of the object to be measured W, viewed from the upper side of the rotary table 110. Then, for the planar image, edges are detected in the radial direction from the center to the periphery of the object to be measured W at predetermined center angle increments (e.g., every 0.1 degrees) over the entire circumference of the object to be measured. Fig. 11 shows an example of an edge corresponding to the outer circumference of the object to be measured W detected in the planar image IMG generated by the image processing unit 140, indicated by an "X " mark. The sum of the distances between adjacent edges is then calculated for a group of edges detected in this way for one round (360 degrees), and the sum is used as the circumference length (inner or outer circumference length) of the portion of the object to be measured in which the edges were detected.

According to the method described above, it is possible to easily measure the inner and outer circumference lengths of the easily deformable object to be measured W.

In the above example, edge detection was performed on the planar image, but it is also possible to perform edge detection on the optical section line image data at each rotation angle obtained by measurement before forming the planar image, and to add information indicating the edge position in the planar image when generating the planar image from the optical section line image data.

### (Measurement of inner or outer diameter)

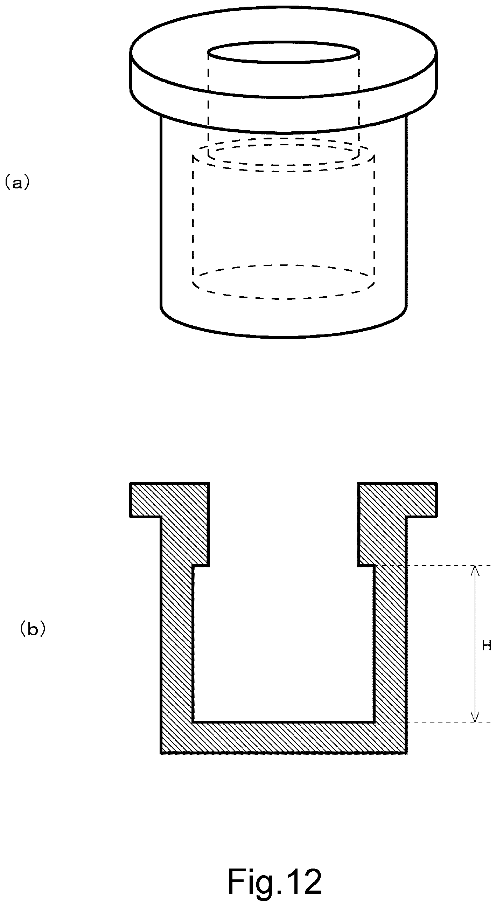

There are cases in which a measurement is required to measure the maximum and/or minimum value of the inner and/or outer diameter for a predetermined height range in the object to be measured W that has an approximate circular outer or inner circumference. When the inner or outer diameter of the object to be measured W varies with height (shown in Fig. 12 as an example), the optical image taken by a camera or the like from the upper side may not be able to measure the inner or outer diameter at the height of interest (for example, in the range indicated by the sign H in Fig. 12). It is also possible to measure the surface shape of such the object to be measured W using a touch probe to obtain the inner or outer diameter, but to obtain the maximum or minimum values of the inner or outer diameters, it is necessary to measure the entire outer or inner circumference over the entire height range of interest, which requires a long time for the measurement.

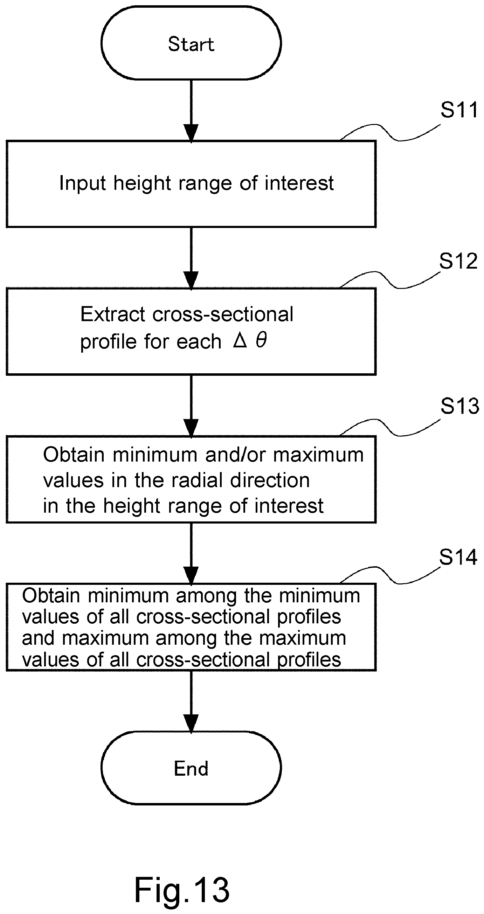

The surface shape measurement device 100 in the present embodiment can measure the maximum and/or minimum values of the inner and/or outer diameter by the following procedure, as shown in the flowchart in Fig. 13. Prior to processing, as previously described, the surface shape of the object to be measured W, placed on the rotary table 110, is measured (from multiple angles if necessary) using the optical sectioning sensor 130. Then, an input for the range of heights for which the maximum and/or minimum value of the inner and/or outer diameter is to be measured is accepted (step S11). Then, for the obtained surface shape (three-dimensional shape) of the object to be measured W, a cross-sectional profile through the center of the circle that forms the outer or inner circumference is extracted for each predetermined step Δθ in the circumferential direction θ in the cylindrical coordinate system (r, θ, z) (step S12). Then, for each cross-sectional profile, the minimum and/or maximum values in the radial direction in the height range of interest are obtained (step S13). The minimum among the minimum values of all cross-sectional profiles is determined as the minimum value in the outer or inner diameter of interest, and the maximum among the maximum values of all profiles is determined as the maximum value in the outer or inner diameter of interest (step S14).

The above method makes it possible to measure the maximum and/or minimum values of inner and/or outer diameter in a desired height range in a relatively short time, even for the measured object W, whose inner and/or outer diameter varies with height. According to the surface shape measurement device 100 configured with the optical sectioning sensor 130 mounted on the robot 150, it is possible to measure the object to be measured W, which is a rotating body or an approximate rotating body, inside, outside, at any height, and at any angle. Thus, for example, for the object to be measured W that has an inner cavity, such as a tire, the optical sectioning sensor 130 can be placed inside the cavity to measure the inside of the object to be measured W, and then the object can be measured from the outside as well, and the obtained data can be combined to obtain three-dimensional shape data of the object to be measured W. The three-dimensional shape of the object to be measured W obtained in this way can also be used to measure the wall thickness of the object to be measured W from the cross-sectional profile thereof.

The present invention is not limited to the above embodiments and variations. The above-mentioned embodiments and variations are examples only, and anything having a configuration substantially the same as the technical idea described in the claims of the present invention and producing similar effects is included in the technical scope of the present invention. In other words, changes can be made as appropriate within the scope of the technical ideas expressed in the present invention, and forms with such changes and improvements are also included in the technical scope of the present invention.

### REFERENCES SIGN LIST

- 100...: Surface shape measurement device
- 110...: Rotary table
- 111...: Platform
- 112...: Motor
- 120...: Encoder
- 130...: Optical sectioning sensor
- 140...: Image processing unit
- 150...: Robot
- 160...: Control unit
- 170...: Computer
- 171...: Storage unit
- 172...: Input unit
- 173...: CPU
- B...: Optical section line image
- W...: Object to be measured
- Wb...: Bottom surface
- Ws...: Side surface

## Claims

1. A surface shape measurement device that measures a three-dimensional shape of a measurement surface in an object to be measured in the shape of a rotating body by optical sectioning method, comprising:
a rotary table that rotates the placed object to be measured in a circumferential direction;
an encoder that sequentially outputs signals according to the rotation angle of the rotary table;
an optical sectioning sensor that irradiates a band-shaped light or a line-shaped light onto the measurement surface and acquires optical section line image data for each rotation angle by sequentially capturing optical section lines generated by the band-shaped light or the line-shaped light, which move across the measurement surface as the rotary table rotates, triggered by a signal output from the encoder; and
an image processing unit that generates a three-dimensional image showing the surface shape of the measurement surface by sequentially arranging the respective optical section line image data according to the corresponding rotation angle.

2. The surface shape measurement device according to claim 1, wherein the optical sectioning sensor irradiates the band-shaped light or the line-shaped light in the radial direction of the object to be measured to the bottom surface when the measuring surface is the bottom surface.

3. The surface shape measurement device according to claim 1, wherein the optical sectioning sensor irradiates the band-shaped light or the line-shaped light in the height direction of the object to be measured to the side surface when the measuring surface is the side surface.

4. The surface shape measurement device according to claim 1, wherein when the image processing unit sequentially arranges the respective optical section line image data according to the corresponding rotation angle, the image processing unit corrects and arranges the optical section line image data according to the regularity based on the misalignment between the center of rotation of the rotary table and the central axis of the object to be measured.

5. The surface shape measurement device according to claim 1, wherein the image processing unit generates a three-dimensional image of the object to be measured in which the surface shape of the bottom surface and the surface shape of the side surface are continuously expressed from the optical section line image data for each rotation angle in which the measurement surface is the bottom surface and the optical section line image data for each rotation angle in which the measurement surface is the side surface.

6. The surface shape measurement device according to any one of claims 1 to 3, further comprises:
a robot having an articulated arm, on the distal end of which the optical sectioning sensor is attached; and
a control unit that causes the robot to move the optical sectioning sensor to the position for acquiring the optical section line image data based on an instruction input.

7. The surface shape measurement device according to claim 6, wherein the robot moves the optical sectioning sensor to acquire the optical section line image data for each rotation angle at two or more acquisition positions in a common coordinate system.

8. The surface shape measurement device according to any one of claims 1 to 3 wherein the image processing unit extracts convex-concavity on the measurement surface of the object to be measured by subtracting a predetermined reference shape from the three-dimensional surface shape of the measurement surface of the object to be measured and recognizes characters and/or figures drawn by the extracted convex-concavity.

9. The surface shape measurement device according to any one of claims 1 to 3 wherein the image processing unit:
generates a planar image of the object to be measured viewed from the upper side of the rotary table from the measured three-dimensional surface shape of the measured surface of the object to be measured;
for the generated planar image, detects edges in the radial direction from the center to the periphery of the object to be measured W at predetermined center angle increments over the entire circumference of the object to be measured; and
calculates the sum of the distances between adjacent edges and uses the sum as the circumference length of the portion of the object to be measured in which the edges were detected.

10. The surface shape measurement device according to any one of claims 1 to 3 wherein the image processing unit:
obtains a plurality of cross-sectional profiles through the center of the object to be measured at each predetermined step in the circumferential direction of the cylindrical coordinate system from the measured three-dimensional surface shape of the measured surface of the object to be measured;
obtains the minimum and/or maximum values in the radial direction in the height range of interest for each of the obtained cross-sectional profiles; and
determines the minimum among the minimum values of all cross-sectional profiles to be the minimum value in the outer or inner diameter of interest, and determines the maximum among the maximum values of all profiles to be the maximum value in the outer or inner diameter of interest.
